# EUROPEAN PATENT SPECIFICATION

(11) **EP 3 219 668 B1**
(45) Date of publication and mention of the grant of the patent: **06.05.2020**
(21) Application number: 15859074.5
(22) Date of filing: 12.03.2015
(51) Int. Cl.: C01B 32/194, B82Y 30/00, H01B 1/04, B82Y 40/00

(54) **METHOD FOR LARGE-SCALE PREPARATION OF BULKY GRAPHENE**
VERFAHREN ZUR MASSENFERTIGUNG VON VOLUMINÖSEM GRAPHEN
PROCÉDÉ POUR LA PRÉPARATION À GRANDE ÉCHELLE DE GRAPHÈNE EN VRAC

(30) Priority: 14.11.2014 CN 201410647957
(43) Date of publication of application: 20.09.2017
(73) Proprietor: Nantong Qiangsheng Graphene Technology Co., Ltd., Nantong, Jiangsu (CN)
(72) Inventor: BAI, Yongxiao, Shanghai 200336 (CN); HU, Xinjun, Shanghai 200336 (CN); SHA, Yan, Shanghai 200336 (CN); SHA, Xiaolin, Shanghai 200336 (CN)
(74) Representative: Sun, Yiming
(86) International application number: PCT/CN2015/074139
(87) International publication number: WO 2016/074393

(56) References cited:
- EP-A1- 2 388 355
- CN-A- 102 020 270
- CN-A- 102 431 998
- CN-A- 103 408 000
- CN-A- 103 408 001
- CN-A- 104 386 680
- US-A1- 2013 302 693
- US-A1- 2014 147 648
- DATABASE WPI Week 201468 Thomson Scientific, London, GB; AN 2014-S54113 XP002773160, -& CN 103 936 000 A (SUZHOU SDIK NEW MATERIAL TECHNOLOGY STOC) 23 July 2014 (2014-07-23)
- DATABASE WPI Week 201370 Thomson Scientific, London, GB; AN 2013-P52178 XP002773156, -& CN 103 043 654 A (NAT CENT NANOSCIENCE & TECHNOLOGY CHINA) 17 April 2013 (2013-04-17)
- DATABASE WPI Week 201156 Thomson Scientific, London, GB; AN 2011-G00624 XP002773161, -& CN 102 020 270 A (CHINESE ACAD SCI METAL RES INST) 20 April 2011 (2011-04-20)

## Description

### TECHNICAL FIELD

The invention relates to a method for preparing graphene sheets, wherein the graphene sheets have radial size of 20 µm to 200 µm.

### BACKGROUND ART

Graphene is a two-dimensional honeycomb lattice structure in monoatomic layer formed of carbon atoms through sp² hybridization. Graphene exists in two-dimensional crystal structures. With a thickness of only 0.334 nm, it is the thinnest material already known in the world at present, also the basic unit constructing carbon materials of other dimensions; it can wrap up to form zero-dimensional fullerenes, roll up to form one-dimensional carbon nanotubes, and stack layer upon layer to form three-dimensional graphite (Allen M J, Tung V C, Kaner R B. Honeycomb carbon: A review of grapheme [J].Chemical Reviews, 2010, 110(1): 132-145.). Due to this special two-dimensional structure, graphene has many special properties. It's theoretical specific surface area is up to 2,630 m²/g, and it has ultrahigh Young's modulus (-1,100 GPa) and breaking strength (125 GPa) as well as excellent heat transformation (-5,000 W/(m×k)) and carrier transformation (2×10⁵ cm²/v), in addition, graphene has many other features in terms of electrical and magnetic properties, e.g. the quantum Hall effect at room temperature, bipolar field effect, ferromagnetism and superconductivity. These excellent properties render graphene a broad application prospect in such fields as nano-electronic devices, gas sensors, energy storage and composites (Geim A K, Novoselov K S. The rise of graphene [J]. Nature Materials, 2007, 6(3): 183-191.).

Though countries around the world have proposed many methods for preparing graphene by far, the radial scale of graphene sheets prepared are small, and the worse thing is subsequent processes requiring ultrasonic exfoliation severely damage edge structures of graphene. Due to the huge instantaneous impact energy from ultrasound and the instantaneous high temperature micro-environment of the reaction part of materials and the medium, the graphene sheet is fragmented into micron, submicron and even nano-scale radial sheet size under strong shear and impact. It is thus difficult to obtain graphene of large-sized lamellar structures from preparation processes of chemical oxidation and ultrasonic exfoliation of the existing liquid-phase oxidation reduction method. Meanwhile, chemical exfoliation is currently inseparable from the water washing process, after which great cohesion emerges between graphite oxide sheets, allowing for very large viscosity for the graphite oxide instantaneously. This not only makes the cleaning process to further remove ions and impurities extraordinarily difficult, also requires longer time and larger consumption of power to finish washing, filtering and drying of the graphite oxide. Moreover, the great cohesion makes the interlamellar spacing of intercalated graphite oxide develop reversely, i.e. the interlamellar spacing of graphite oxide will somewhat decrease, making it increasingly difficult for the exfoliation of graphene and going against the exfoliation of lamella. To achieve effective ultrasonic exfoliation and delamination, ultrasonic treatment of more power and longer time is needed. It is conceivable that exposure to intense ultrasound and cavitation condition for long time will cause heavy damage to the graphite oxide's crystal structure, resulting in loss of some properties of the graphene prepared. This is another bottleneck for preparing graphene by chemical exfoliation of the existing liquid-phase oxidation reduction method. In addition, chemical exfoliation of the existing liquid-phase oxidation reduction method requires very long time and enormous power consumption to finish off washing and filtering processes of the graphite oxide, and this constraint significantly raises the preparation cost of its products and dramatically reduces the production efficiency. In short, harsh preparation conditions, complex process, low efficiency and small radial sheet scale are universal in the process of preparing graphene by the existing liquid-phase chemical exfoliation method. The graphene prepared is more defective in the lattice, and has severe damage in the sp² hybridization structure and larger loss of intrinsic properties due to overoxidation and violent reactions. As a result, it is necessary and urgent to develop a method of mild intercalation, simple process, high-efficient production and large radial sheet size for preparing graphene in large scale.

Size of the graphene sheet has a decisive impact on the electrical conductivity of electronic devices and composites and on such properties as mechanical properties, antistatic behavior, gas barrier resistance, electrical and thermal conductivity of graphene-polymer nanocomposites (Lin X, Shen X, Zheng Q, Yousefi N, Ye L, Mai Y-W, et al. Fabrication of Highly-Aligned, Conductive, and Strong Graphene Papers Using UltralargeGraphene Oxide Sheets. ACS Nano. 2012; 6(12):10708-19). Graphene of larger radial sheet size can effectively form comparatively complete network structures in the matrix as built, and interconnected and bridging network structure can significantly improve the material's composite properties such as antistatic behavior, gas barrier resistance, electrical and thermal conductivity; compared with ordinary small graphene sheets, large graphene sheets of larger radial scale can realize and reach the above functionality of the material as built at lower addition levels. Therefore, preparation of large graphene sheets and large-scale production technology are urgent and critical. At present, there have been reports of patents using improved Hummers' Method to prepare graphene oxide with small-sized graphite powder or expanded graphite as raw materials, while in the case with small-sized graphite powder, the oxidation efficiency is higher. When large-grained flake graphite is used as the raw material in the prior art, both its oxidation efficiency and the graphite oxide's peel strength are poor, and subsequent fractionation is required for the product, resulting in low yield and complicated process. Graphene products obtained have smaller radial sheet size (20-80 µm), complex preparation process and relatively high cost, for example, large sheets of graphene oxide obtained by Min Yonggang and others [CN 103741264 A] through intercalation of graphite with strong acids first, expansion at high temperature, and then oxidization, centrifugation and dialysis with Hummers' Method.

EP 2 388 355 A1 discloses forming a graphene thin layer on a resin substrate; and electroplating the resin substrate having the graphene thin layer formed thereon, wherein the forming the graphene thin layer comprises: applying a graphene oxide dispersion to the resin substrate to form a graphene oxide coating; and reducing the graphene oxide coating.

US 2014/147648 A1 discloses a unitary graphene layer or graphene single crystal containing closely packed and chemically bonded parallel graphene planes having an inter-graphene plane spacing of 0.335 to 0.40 nm and an oxygen content of 0.01 % to 10% by weight, which unitary graphene layer or graphene single crystal is obtained from heat-treating a graphene oxide gel at a temperature higher than 100°C, wherein the average mis-orientation angle between two graphene planes is less than 10 degrees, more typically less than 5 degrees. The molecules in the graphene oxide gel, upon drying and heat-treating, are chemically interconnected and integrated into a unitary graphene entity containing no discrete graphite flake or graphene platelet. CN 102 020 270 A discloses mass preparation of large-size graphene comprising: (A) weak oxidizing large-size graphite by modified Hummers method; (B) dispersing graphite oxide in water; and stripping graphite oxide by weak ultrasonic-assisted or oscillating method; (C) separating graphene oxide by removing graphite oxide, which is not stripped completely, and small-size graphene oxide to obtain uniform large-size graphene oxide; (D) reducing the large-size graphene oxide by depositing graphene oxide dispersing liquid on base; reducing the liquid by hydrazine or hydrazine hydrate; removing oxygen-containing functional group; and restoring the performance.

### SUMMARY OF THE INVENTION

The invention aims to provide a method for preparing large graphene sheets in large scale with cheap and available raw materials, easy operation and simple process (efficient), high yield, large radial sheet size as well as undamaged crystal structures (high quality) to address shortcomings of the above prior art.

The method of the invention for preparing large graphene sheets in large scale consists of three steps of graphite oxidation, washing with dilute hydrochloric acid and heat treatment. It is the way to realize large-scale preparation of high-quality large graphene sheets with low cost, high efficiency, low energy consumption and being environmentally friendly.

The object of the invention is realized by means of the technical solution below:
The invention relates to a method for preparing graphene sheets, wherein the graphene sheets have radial size of 20 µm to 200 µm and are obtained by: intercalating an acid and an oxidant into graphite powder by mixing graphite powder with the acid, putting on an ice bath and adding the oxidant, mixing evenly for 2-48 hours, then continue the oxidation for 35-120 hours after rising the temperature to 35°C; washing off metal ions and inorganic ions with dilute hydrochloric acid; and filtering, drying and heat treating. It avoids the processes of high temperature, sustained and multi-step oxidation required by the existing oxidization reduction method, and precludes the fatal flaw of traditional methods that the graphite oxide's viscosity becomes very large instantaneously for the huge cohesion between sheets of graphite oxide after water washing. Viscosity increase makes it extraordinarily difficult for the cleaning process to further remove ions and impurities during graphite preparation, and thus requires longer time and larger consumption of power to finish washing, filtering and drying of the graphite oxide. In the meantime, the invention effectively solves the strong van der Waals force and cohesion arising between sheets during treatment of graphite oxide in the current oxidation reduction method, and thus the problem that interlamellar spacing of intercalated graphite oxide develop reversely, i.e. the interlamellar spacing of graphite oxide will decrease rapidly is effectively solved. For increase in interlamellar forces of graphite oxide will make it more difficult for exfoliation of oxidized graphite, quite negative for obtaining thinner graphene sheets by exfoliation of graphite oxide sheets.

As a preferred technical solution, said acid is the mixture of one or more from concentrated sulphuric acid, concentrated nitric acid, phosphoric acid and perchloric acid.

As a preferred technical solution, said oxidant is one or more from potassium permanganate, potassium chlorate, sodium chlorate, potassium persulfate and potassium dichromate.

As a preferred technical solution, said graphite powder is the combination of one or more from natural flake graphite powder, expandable graphite powder and expanded graphite powder. The radial sheet size of said graphite powder is 300-500 µm.

As a preferred technical solution, the radial scale of the prepared large graphene sheets is distributed from 20 µm to 200 µm, and magnitude and distribution of the graphene's radial scale can be regulated by control of kinetic conditions such as reactant proportion, reaction time and agitation rate.

As a preferred technical solution, the appropriate acid amount for each gram of graphite powder is 20-60 ml and the appropriate oxidant amount for each gram of graphite powder is 5-10 g.

As a preferred technical solution, the appropriate amount of dilute hydrochloric acid for each gram of graphite powder is 150-350 ml and the volume percentage concentration of said dilute hydrochloric acid is 0.5-10%.

As a preferred technical solution, temperature of said heat treatment is 500-1,050°C.

Heat treatment is adopted in the invention to realize exfoliation of sheets. Exfoliation of sheets does not require ultrasonic exfoliation, prolonged high-energy shear and high-speed grinding treatment in traditional oxidization reduction methods. This avoids loss of some properties of the graphene prepared resulting from heavy damage to the graphite oxide's crystal structure by exposure to intense ultrasound, cavitation condition and the effect of strong energy for long time.

As a preferred technical solution, said method specifically comprises the following steps:
A. obtaining an aqueous solution containing graphite oxide by mixing the graphite powder with the acid, putting the mixture on an ice bath and adding the oxidant, mixing evenly and reacting for 2-48 hours, then continue the oxidation for 36-120 hours after rising the temperature to 35°C, diluting with water, and finally adding hydrogen peroxide ;
B. obtaining a filter cake by vacuum filtrating the mixed aqueous solution containing graphite oxide, washing it first with 10% (V/V) dilute hydrochloric acid, then washing off the remaining metal ions and inorganic ions with 0.5-1 % (V/V) dilute hydrochloric acid, filtering and drying;
C. obtaining graphene sheets by grinding the filter cake and heat treating for 15-30 seconds.

As a preferred technical solution, in step A, the appropriate amount of hydrogen peroxide for each gram of graphite powder is 2-20 ml and the appropriate water amount for each gram of graphite powder is 150-200 ml.

As a preferred technical solution, in step B, said drying temperature is 30-85°C, and the drying time is 48-200 hours.

As a preferred technical solution, in step C, said grinding equipment is one of the edge runner, vibration mill, turbine grinder, jet mill, fan mill, sand mill, colloid mill, ball mill and family-use grinder.

Compared with the prior art, the invention has the following beneficial effects:
1. The invention uses cheap raw materials and has simple process, high efficiency and no need for water washing and for ultrasonic exfoliation. A small amount of volatile hydrochloric acid molecules is adsorbed between the graphite oxide sheets, and at heat treatment, oxygen-containing groups of graphite oxide quickly break down and produce large amounts of gas to promote delamination. Meanwhile, graphite oxide sheets with hydrochloric acid molecules can also expand and release gases to make it exfoliate instantly, and thus the above dual effect realizes efficient exfoliation of the graphite oxide and avoids disadvantages of severe damage to the graphene's crystal structure and of continuous grinding the radial sheet size with ultrasonic exfoliation, so that graphene of large radial sheet size and high quality is obtained, which is easy to realize industrialized mass production.
2. The radial scale of graphene sheets prepared by the invention is distributed from 20 µm to 200 µm, and magnitude and distribution of the graphene's radial scale can be regulated by control of the graphite raw materials and reaction conditions. The graphene prepared has few defects, high quality and large specific surface area, and moreover, its mechanical properties, electrical properties and thermal conductivity are less damaged. Graphene is dispersed in N-Methyl-2-pyrrolidone, and electrical conductivity of the film formed by pump filtration is above 600 S/cm, able to meet requirements of composites and electronics industries for high-quality graphene products.

### DESCRIPTION OF THE FIGURES

Other features, objects, and advantages of the patent of invention will become more apparent from reading the description of non-limiting embodiments detailed with reference to the following figures:
Figure 1 is the process flow diagram for preparing graphene;
Figure 2 is X-ray diffraction spectra of graphite, graphite oxide and graphene in Embodiment 1;
Figure 3 is the SEM image of graphene;
Figure 4 is the local SEM image of the graphene sheet;
Figure 5 is the Raman spectra of the graphene, graphite oxide and graphite powder in Embodiment 2.

### EMBODIMENTS

The invention is elaborated below with figures and specific embodiments. The following embodiments will help provide further understanding of the invention for those skilled in the art, and not in any way limit the invention. It shall be noted that several variants and improvements can be made without departing from concept of the invention for those of ordinary skill in the art. All these fall within the scope of protection of the invention.

The invention relates to a method for preparing large graphene sheets in large scale, in which high-quality large graphene sheets are obtained by intercalation and modification of large graphite sheets with acids and oxidants, washing off the metal and inorganic ions therein with dilute hydrochloric acid, filtering, drying and heat treatment, and it effectively avoids a series of problems restricting the efficient preparation of high-quality graphene arising from washing it to be neutral with water in conventional methods. The invention comprises the following steps:
(1) Mix the graphite with acids, slowly add the oxidant in ice bath, and react it as mixed evenly therein for 2-48 hours, then continue the oxidation for 36-120 hours after the temperature rises to 35°C, and dilute with water, finally add a certain amount of hydrogen peroxide to obtain mixed aqueous solution containing graphite oxide. The graphite may be the combination of one or more of natural flake graphite, expandable graphite or expanded graphite, and its sheet size is optimal from 300 µm to 500 µm.Acid (generally recognized as acids of 98% concentration) is the mixture of one or more of concentrated sulphuric acid, concentrated nitric acid, phosphoric acid and perchloric acid. The oxidant is one or more of potassium permanganate, potassium chlorate, sodium chlorate, potassium persulfate and potassium dichromate. The proportion of graphite with the acid is 1 g : 20-60 ml, with the oxidant 1 g : 5-10 g, and with 20% (V/V) aqueous hydrogen peroxide solution 1 g : 2-20 ml.
(2) Perform vacuum filtration for the mixed aqueous solution containing graphite oxide obtained above, wash it with 10% aqueous hydrochloric acid solution, then dry it at certain temperature after washing off the remaining metal ions and inorganic ions and filtering. The proportion of graphite with the dilute hydrochloric acid for is 1 g: 300-500 ml, the drying temperature of the graphite oxide filter cake after filtering is 30-85°C, and the drying time of the graphite oxide filter cake is 48-200 hours.
(3) Grinded the filter cake and washed by dilute hydrochloric acid with machinery and perform heat treatment at certain temperature for 15-30 seconds to obtain large graphene sheets, and the yield of graphene of a layer number below 10 is above 90%. The grinding equipment is one of the edge runner, vibration mill, turbine grinder, jet mill, fan mill, sand mill, colloid mill, ball mill, family-use grinder and etc. The heat treatment of graphite oxide powder has a temperature ranging from 500-1,350°C. See the following embodiments for details:

### Embodiment 1

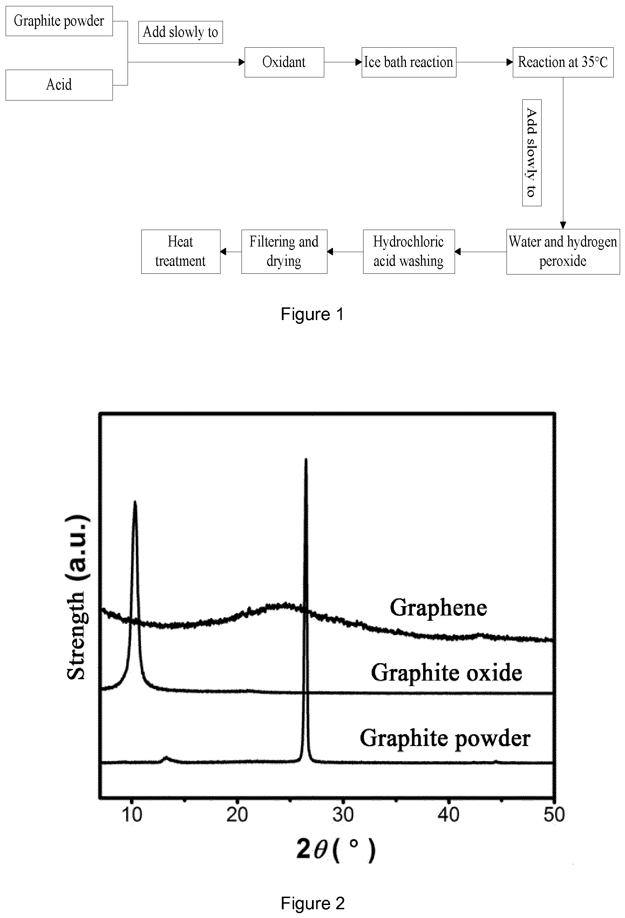

The embodiment relates to a method for preparing large graphene sheets in large scale, and the specific preparation process is shown as in Figure 1:
Mix 12 g 500 µm natural flake graphite with 260 ml concentrated sulphuric acid, slowly add 60 g potassium permanganate in ice bath, and react it as mixed evenly therein for 2 hours, then continue the oxidation for 48 hours after the temperature rises to 35°C, and slowly add 1.8 L deionized water and then add 30 ml 20% (V/V) aqueous hydrogen peroxide solution to obtain mixed aqueous solution containing graphite oxide. Perform vacuum filtration for the mixed aqueous solution containing graphite oxide, wash off the remaining metal ions and inorganic ions and filtering separately with 1 L 10% (V/V) and 1 L 0.5% (V/V) hydrochloric acid, and then dry it at 60°C for 48 hours. Grind the filter cake into powder with the family-use grinder, treat for 15 s at 1,050°C to obtain large graphene sheets, and the yield of graphene of a layer number below 10 is above 90%.

For the above large graphene sheets, the graphene of a radial sheet size between 20 and 100 µm accounts for 50%, and for 15% over 100 µm.

Figure 2 is X-ray diffraction spectra of graphite, graphite oxide and graphene, and as seem from Figure 2, the characteristic peak of natural graphite powder is at 26.4°, which is the (002) crystal face of graphite crystal. Calculated from the Bragg diffraction equation, the interlamellar spacing is 0.34 nm. When the natural graphite powder is oxidized, its (002) peak disappears, and the graphite oxide's characteristic peak is at 10.8° and is the (001) characteristic peak of crystal face. The corresponding interlamellar spacing is 0.84 nm. And at the position of 26.4°, graphene shows characteristic peak (002) that is significantly widened in relation to that of natural graphite powder, which indicates that the interlamellar spacing of graphene is larger than that of natural graphite powder, i.e. the latter is exfoliated into graphene.

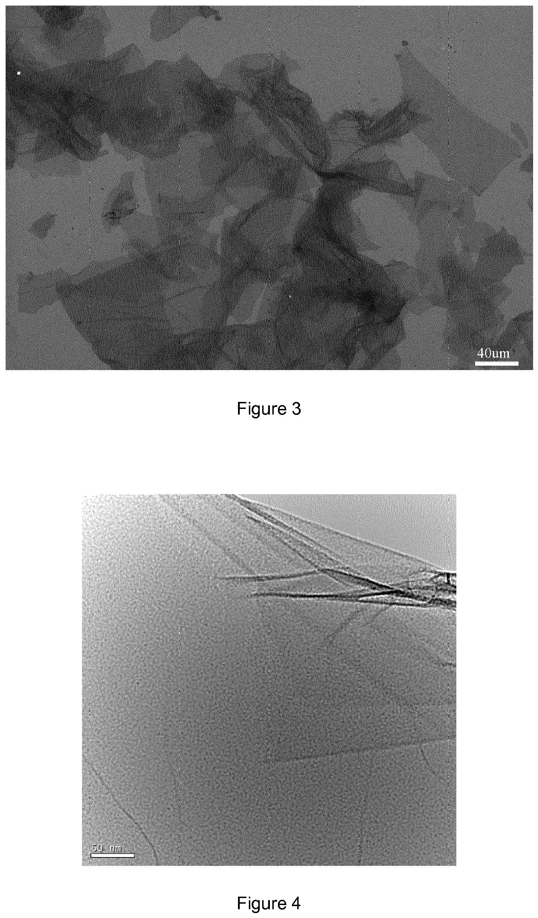

Figure 3 is the SEM image of graphene prepared in this embodiment, and Figure 4 is the local SEM image of the graphene sheet. As seen in Figure 3 and 4, the graphene prepared in the invention has large radial sheet size, flat sheet structure, less crystal defects and high quality.

### Embodiment 2

The embodiment relates to a method for preparing large graphene sheets in large scale, and the specific preparation process is shown as in Figure 1:
Mix 12 g 500 µm expandable graphite with 720 ml concentrated sulphuric acid, slowly add 120 g potassium chlorate in ice bath, and react it as mixed evenly therein for 48 hours, then continue the oxidation for 36 hours after the temperature rises to 35°C, and slowly add 2 L deionized water and then add 240 ml hydrogen peroxide to obtain mixed aqueous solution containing graphite oxide. Perform vacuum filtration for the mixed aqueous solution containing graphite oxide, wash off the remaining metal ions and inorganic ions and filtering separately with 2 L 10% (V/V) and 1 L 0.5% (V/V) hydrochloric acid, and then dry it at 85°C for 100 hours. Grind the filter cake into powder with the family-use grinder, treat for 30 s at 850°C to obtain large graphene sheets, and the yield of graphene of a layer number below 10 is above 90%.

For the above large graphene sheets, the graphene of a radial sheet size between 20 and 100 µm accounts for 65%, and for 13% over 100 µm.

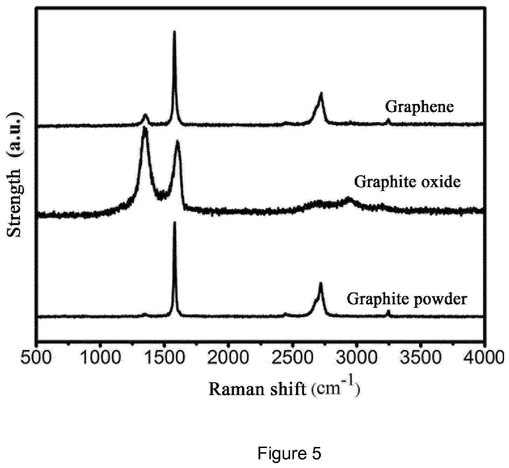

Figure 5 is the Raman spectra of the graphene, graphite oxide and graphite powder prepared in this embodiment, and main characteristic peaks of the graphene's Raman spectra are D peak (at 1,340 cm⁻¹), G peak (at 1,580 cm⁻¹) and 2D peak (at 2,700 cm⁻¹). The generation process of D peak involves the defect scattering process of incident photons, therefore, it can reflect the disorder of graphene caused by groups, defects and edges. The more defects, the higher degree of disorder and the stronger is D peak. The graphite powder has increased defects and higher D peak after oxidation and intercalation, and D peak obviously weakens after high temperature expansion reduction, which indicates that the graphene prepared in the invention has few defects and high quality.

### Embodiment 3

The embodiment relates to a method for preparing large graphene sheets in large scale, and the specific preparation process is shown as in Figure 1:
Mix 12 g 300 µm graphite powder with 480 ml perchloric acid, slowly add 90g potassium persulfate in ice bath, and react it as mixed evenly therein for 20 hours, then continue the oxidation for 120 hours after the temperature rises to 35°C, and slowly add 2.4 L deionized water and then add 24 ml hydrogen peroxide to obtain mixed aqueous solution containing graphite oxide. Perform vacuum filtration for the mixed aqueous solution containing graphite oxide, wash off the remaining metal ions and inorganic ions and filtering separately with 1.4 L 10% (V/V) and 1 L 1% (V/V) hydrochloric acid, and then dry it at 30°C for 200 hours. Grind the filter cake into powder with the family-use grinder, treat for 30 s at 500°C to obtain large graphene sheets, and the yield of graphene of a layer number below 10 is above 85%.

For the above large graphene sheets, the graphene of a radial sheet size between 20 and 100 µm accounts for 80%, and for 5% over 100 µm.

### Embodiment 4

The embodiment relates to a method for preparing large graphene sheets in large scale, and the specific preparation process is shown as in Figure 1:
Mix 12 g 400 µm expanded graphite with 240 ml phosphoric acid, slowly add 60 g potassium dichromate in ice bath, and react it as mixed evenly therein for 2 hours, then continue the oxidation for 48 hours after the temperature rises to 35°C, and slowly add 1.8 L deionized water and then add 30 ml hydrogen peroxide to obtain mixed aqueous solution containing graphite oxide. Perform vacuum filtration for the mixed aqueous solution containing graphite oxide, wash off the remaining metal ions and inorganic ions and filtering separately with 1 L 10% (V/V) and 1 L 0.8% (V/V) hydrochloric acid, and then dry it at 60°C. Grind the filter cake into powder with the family-use grinder, treat for 15 s at 1,050°C to obtain large graphene sheets, and the yield of graphene of a layer number below 10 is above 90%.

For the above large graphene sheets, the graphene of a radial sheet size between 20 and 100 µm accounts for 70%, and for 8% over 100 µm.

### Embodiment 5

Treat the graphite oxide prepared in Embodiment 1 for 15 s at 1,350°C to obtain large graphene sheets, and the yield of graphene of a layer number below 10 is above 90%. Compared with Embodiment 1, the graphene obtained after treatment at 1,350°C has higher quality, and D peak in the Raman spectrum basically disappears, that is, the defect and structural imperfection of graphene are greatly decreased and reduced at higher temperatures. It shows that exfoliation and reduction-oxidation of graphene at higher temperatures (e.g. 1,350°C) lead to less defects and greater degree of reduction, namely, high-quality graphene reduced more thoroughly, in relation to that from exfoliation and reduction processes at 1,050°C. Intrinsic properties such as electrical and thermal conductivity of the prepared large graphene sheets will be further improved.

In conclusion, in the method of the invention for preparing large graphene sheets in large scale, the graphite intercalation process is in a mild manner, after which post-processes of the graphite oxide such as washing, filtering and drying are very simple and effective, avoiding a series of problems restricting the high-quality and efficient preparation of graphene arising from washing the graphite oxide to be neutral with a large amount of distilled water. Using cheap raw materials, mild conditions and simple process, with low energy consumption and no need for water washing and ultrasonic exfoliation, and being environmentally friendly, the invention is easy to realize industrialized mass production. The scale distribution of graphene sheets prepared of the invention is between 20 µm and 200 µm, and regulation of the graphene sheet's radial scale and size distribution is achieved through selection of graphite raw materials and control of reaction conditions. The graphene prepared of the invention has few defects and high quality, basically able to keep its intrinsic properties, especially the electrical and thermal conductivity. The electrical conductivity of the film formed by pump filtration of graphene dispersion is above 600 S/cm, able to satisfy the demand for high-quality graphene products of such fields as utilizing mechanical properties of the graphene film, fiber and composites and playing the functional features of the electronic material and functional coating.

Specific embodiments of the invention are described above. It shall be understood that the invention is not limited to the above specific embodiments, and those skilled in the art can make different variants and modifications within the scope of the claims, and it shall not affect the substance of the invention.

## Claims

1. A method for preparing graphene sheets, wherein the graphene sheets have radial size of 20 µm to 200 µm and are obtained by:
- intercalating an acid and an oxidant into graphite powder by mixing graphite powder with the acid, putting on an ice bath and adding the oxidant, mixing evenly for 2-48 hours, then continue the oxidation for 35-120 hours after rising the temperature to 35°C,
- washing off metal ions and inorganic ions with dilute hydrochloric acid, and
- filtering, drying and heat treating.

2. The method for preparing graphene sheets according to claim 1, wherein the acid is the mixture of one or more from concentrated sulphuric acid, concentrated nitric acid, phosphoric acid and perchloric acid.

3. The method for preparing graphene sheets according to claim 1, wherein the oxidant is one or more from potassium permanganate, potassium chlorate, sodium chlorate, potassium persulfate and potassium dichromate.

4. The method for preparing graphene sheets according to claim 1, wherein the graphite powder is the combination of one or more from natural flake graphite powder, expandable graphite powder and expanded graphite powder.

5. The method for preparing graphene sheets according to claim 1, wherein the appropriate acid amount for each gram of graphite powder is 20-60 ml and the appropriate oxidant amount for each gram of graphite powder is 5-10 g.

6. The method for preparing graphene sheets according to claim 1, wherein the appropriate amount of dilute hydrochloric acid for each gram of graphite powder is 150-350 ml and the volume percentage concentration of the dilute hydrochloric acid is 0.5-10%.

7. The method for preparing graphene sheets according to claim 1, wherein the temperature of the heat treatment is 500-1,350°C.

8. The method for preparing graphene sheets according to any one of claims 1 to 7, wherein the method comprising the following steps:
A. obtaining an aqueous solution containing graphite oxide by mixing the graphite powder with the acid, putting the mixture on an ice bath and adding the oxidant, mixing evenly and reacting for 2-48 hours, then continue the oxidation for 36-120 hours after rising the temperature to 35°C, diluting with water, and finally adding hydrogen peroxide;
B. obtaining a filter cake by vacuum filtrating the aqueous solution containing graphite oxide, washing it with dilute hydrochloric acid having a volume concentration of 10%, then washing off the remaining metal ions and inorganic ions with dilute hydrochloric acid having a volume concentration of 0.5-1 %, filtering and drying;
C. obtaining graphene sheets by grinding the filter cake and heat treating for 15-30 seconds.

9. The method for preparing graphene sheets according to claim 8, wherein the appropriate amount of hydrogen peroxide for each gram of graphite powder is 2-20 ml and the appropriate water amount for each gram of graphite powder is 150-200 ml in step A.

10. The method for preparing graphene sheets according to claim 8, wherein in step B, the drying temperature is 30-85°C, the drying time is 48-200 hours; in step C, the grinding is performed on one of the edge runner, vibration mill, turbine grinder, jet mill, fan mill, sand mill, colloid mill, ball mill and family-use grinder.

## Patentansprüche

1. Verfahren zum Herstellen von Graphen-Platten, wobei die Graphen-Platten eine radiale Größe von 20 µm bis 200 µm aufweisen und erhalten werden durch:
- Interkalieren einer Säure und eines Oxidationsmittels in Graphitpulver durch Mischen von Graphitpulver mit der Säure, Überführen in ein Eisbad und Zugeben des Oxidationsmittels, gleichmäßiges Mischen für 2 bis 48 Stunden, dann Fortsetzen der Oxidation für 35 bis 120 Stunden nach Erhöhen der Temperatur auf 35 °C,
- Abwaschen von Metallionen und anorganischen Ionen mit verdünnter Salzsäure und
- Filtern, Trocknen und Wärmebehandeln.

2. Verfahren zum Herstellen von Graphen-Platten nach Anspruch 1, wobei die Säure die Mischung aus einer oder mehreren aus konzentrierter Schwefelsäure, konzentrierter Salpetersäure, Phosphorsäure und Perchlorsäure ist.

3. Verfahren zum Herstellen von Graphen-Platten nach Anspruch 1, wobei das Oxidationsmittel eines oder mehrere aus Kaliumpermanganat, Kaliumchlorat, Natriumchlorat, Kaliumpersulfat und Kaliumdichromat ist.

4. Verfahren zum Herstellen von Graphen-Platten nach Anspruch 1, wobei das Graphitpulver die Kombination von einem oder mehreren aus natürlichen Graphitpulverflocken, expandierbarem Graphitpulver und expandiertem Graphitpulver ist.

5. Verfahren zum Herstellen von Graphen-Platten nach Anspruch 1, wobei die geeignete Säuremenge für jedes Gramm Graphitpulver 20 bis 60 ml und die geeignete Oxidationsmittelmenge für jedes Gramm Graphitpulver 5 bis 10 g beträgt.

6. Verfahren zum Herstellen von Graphen-Platten nach Anspruch 1, wobei die geeignete Menge an verdünnter Salzsäure für jedes Gramm Graphitpulver 150 bis 350 ml beträgt und die Volumenprozentkonzentration der verdünnten Salzsäure 0,5 bis 10 % beträgt.

7. Verfahren zum Herstellen von Graphen-Platten nach Anspruch 1, wobei die Temperatur der Wärmebehandlung 500 bis 1.350 °C beträgt.

8. Verfahren zum Herstellen von Graphen-Platten nach einem der Ansprüche 1 bis 7, wobei das Verfahren die folgenden Schritte umfasst:
A. Erhalten einer wässrigen Lösung, die Graphitoxid enthält, durch Mischen des Graphitpulvers mit der Säure, Überführen der Mischung in ein Eisbad und Zugeben des Oxidationsmittels, gleichmäßiges Mischen und Umsetzen für 2 bis 48 Stunden, dann Fortsetzen der Oxidation für 36 bis 120 Stunden nach Erhöhen der Temperatur auf 35 °C, Verdünnen mit Wasser und schließlich Zugeben von Wasserstoffperoxid;
B. Erhalten eines Filterkuchens durch Vakuumfiltrieren der wässrigen Lösung, die Graphitoxid enthält, Waschen desselben mit verdünnter Salzsäure mit einer Volumenkonzentration von 10 %, dann Abwaschen der verbliebenen Metallionen und anorganischen Ionen mit verdünnter Salzsäure mit einer Volumenkonzentration von 0,5 bis 1 %, Filtern und Trocknen;
C. Erhalten von Graphen-Platten durch Zermahlen des Filterkuchens und Wärmebehandeln für 15 bis 30 Sekunden.

9. Verfahren zum Herstellen von Graphen-Platten nach Anspruch 8, wobei die geeignete Menge an Wasserstoffperoxid für jedes Gramm Graphitpulver 2 bis 20 ml und die geeignete Wassermenge für jedes Gramm Graphitpulver 150 bis 200 ml in Schritt A beträgt.

10. Verfahren zum Herstellen von Graphen-Platten nach Anspruch 8, wobei in Schritt B die Trocknungstemperatur 30 bis 85 °C beträgt, die Trocknungsdauer 48 bis 200 Stunden beträgt; wobei in Schritt C das Zermahlen in einer Kollergangmühle, einer Schwingmühle, einem Turbinenschleifer, einer Strahlmühle, einer Gebläsemühle, einer Sandmühle, einer Kolloidmühle, einer Kugelmühle oder einer Mühle für den häuslichen Gebrauch durchgeführt wird.

## Revendications

1. Procédé de préparation de feuilles de graphène, dans lequel les feuilles de graphène ont une taille radiale de 20 µm à 200 µm et sont obtenues par :
- intercalation d'un acide et d'un oxydant dans de la poudre de graphite par mélange de la poudre de graphite avec l'acide, placement sur un bain de glace et ajout de l'oxydant, mélange de manière homogène pendant 2 à 48 heures, puis poursuite de l'oxydation pendant 35 à 120 heures après augmentation de la température à 35 °C,
- élimination par lavage des ions métalliques et des ions inorganiques avec de l'acide chlorhydrique dilué, et
- filtration, séchage et traitement thermique.

2. Procédé de préparation de feuilles de graphène selon la revendication 1, dans lequel l'acide est le mélange d'un ou plusieurs parmi l'acide sulfurique concentré, l'acide nitrique concentré, l'acide phosphorique et l'acide perchlorique.

3. Procédé de préparation de feuilles de graphène selon la revendication 1, dans lequel l'oxydant est un ou plusieurs parmi le permanganate de potassium, le chlorate de potassium, le chlorate de sodium, le persulfate de potassium et le dichromate de potassium.

4. Procédé de préparation de feuilles de graphène selon la revendication 1, dans lequel la poudre de graphite est la combinaison d'une ou plusieurs parmi la poudre de graphite naturelle en flocon, la poudre de graphie expansible et la poudre de graphite expansée.

5. Procédé de préparation de feuilles de graphène selon la revendication 1, dans lequel la quantité d'acide appropriée pour chaque gramme de poudre de graphite est de 20 à 60 ml et la quantité d'oxydant appropriée pour chaque gramme de poudre de graphite est de 5 à 10 g.

6. Procédé de préparation de feuilles de graphène selon la revendication 1, dans lequel la quantité appropriée d'acide chlorhydrique dilué pour chaque gramme de poudre de graphite est de 150 à 350 ml et la concentration en pourcentage volumique de l'acide chlorhydrique dilué est de 0,5 à 10 %.

7. Procédé de préparation de feuilles de graphène selon la revendication 1, dans lequel la température du traitement thermique est de 500 à 1 350 °C.

8. Procédé de préparation de feuilles de graphène selon l'une quelconque des revendications 1 à 7, dans lequel le procédé comprend les étapes suivantes :
A. obtention d'une solution aqueuse contenant de l'oxyde de graphite par mélange de la poudre de graphite avec l'acide, placement du mélange sur un bain de glace et ajout de l'oxydant, mélange de manière homogène et réaction pendant 2 à 48 heures, puis poursuite de l'oxydation pendant 36 à 120 heures après augmentation de la température à 35 °C, dilution avec de l'eau, et enfin ajout de peroxyde d'hydrogène ;
B. obtention d'un gâteau de filtration par filtration sous vide de la solution aqueuse contenant l'oxyde de graphite, son lavage avec de l'acide chlorhydrique dilué ayant une concentration volumique de 10 %, puis élimination par lavage des ions métalliques et des ions inorganiques restants avec de l'acide chlorhydrique dilué ayant une concentration volumique de 0,5 à 1 %, filtration et séchage ;
C. obtention de feuilles de graphène par broyage du gâteau de filtration et chauffage thermique pendant 15 à 30 secondes.\

9. Procédé de préparation de feuilles de graphène selon la revendication 8, dans lequel la quantité appropriée de peroxyde d'hydrogène pour chaque gramme de poudre de graphite est de 2 à 20 ml et la quantité appropriée d'eau pour chaque gramme de poudre de graphite est de 150 à 200 ml à l'étape A.

10. Procédé de préparation de feuilles de graphène selon la revendication 8, dans lequel, à l'étape B, la température de séchage est de 30 à 85 °C, le temps de séchage est de 48 à 200 heures ; à l'étape C, le broyage est réalisé sur une meule verticale, un broyeur oscillant, un broyeur à turbine, un broyeur à jet, un broyeur à ventilateur, un broyeur à sable, un broyeur colloïdal, un broyeur à boulets et un broyeur à usage familial.
